(19) **Europäisches Patentamt**

**European Patent Office**

**Office européen des brevets**

(11) Veröffentlichungsnummer: **0 018 940**
**B1**

(12) # EUROPÄISCHE PATENTSCHRIFT

(45) Veröffentlichungstag der Patentschrift:
**12.10.83**

(51) Int. Cl.³: **H 04 B 1/38**

(21) Anmeldenummer: **80810114.1**

(22) Anmeldetag: **02.04.80**

(54) **Tragbares Funkgerät mit vom Sender-Empfänger-Teil trennbarem Batterie-Teil.**

(30) Priorität: **09.04.79 CH 3316/79**

(43) Veröffentlichungstag der Anmeldung:
**12.11.80 Patentblatt 80/23**

(45) Bekanntmachung des Hinweises auf die Patenterteilung:
**12.10.83 Patentblatt 83/41**

(84) Benannte Vertragsstaaten:
**AT BE CH DE FR IT LI NL SE**

(56) Entgegenhaltungen:
**DD-A-53 127**
**DE-A-1 496 311**
**FR-A-1 337 256**
**GB-A-1 489 528**
**US-A-4 072 800**

(73) Patentinhaber: **Autophon A.G., Ziegelmattstrasse 1-15,
CH-4500 Solothurn 3 (CH)**

(72) Erfinder: **Stuber, Linus, Neumattstrasse 365,
CH-4707 Deitingen/SO (CH)**

(74) Vertreter: **Bovard, Fritz Albert et al, Bovard & Cie.
Patentanwälte VSP-Rechtsanwälte Optingenstrasse 16,
CH-3000 Bern 25 (CH)**

Tragbares Funkgerät mit vom Sender-Empfänger-Teil trennbarem Batterie-Teil

Die vorliegende Erfindung betrifft ein tragbares Funkgerät, welches aus zwei quaderförmigen Teilen besteht, von denen der eine einen Sender-Empfänger und der andere eine Batterie enthält. Diese Teile sind dabei längs einer bestimmten, je vier Ränder aufweisenden Aussenfläche betriebsmässig trennbar und wieder verbindbar. Es ist allgemein bekannt, bei tragbaren Funkgeräten diese Trennbarkeit vorzunehmen, da auf diese Weise eine entladene Batterie auf einfache Weise gegen eine geladene ausgewechselt werden kann, wobei die entladene Batterie unabhängig vom Funkgerät wiederum aufgeladen werden kann.

Es ist naheliegend, an der genannten Aussenfläche des Sender-Empfänger-Teils senkrecht darauf stehende, der Zuführung von Speisung dienende erste Kontakte und am Batterie-Teil an der genannten Aussenfläche der Abgabe von Speisestrom dienende, zum Zusammenwirken mit den genannten ersten Kontakten bestimmte, einen Schlitz aufweisende zweite Kontakte anzuordnen.

Es ist ebenfalls naheliegend, die Lage der ersten und zweiten Kontakte so zu wählen, dass, während Teile der Ränder mechanisch miteinander in Beziehung stehen, durch eine zwischen den beiden Geräteteilen stattfindende Relativbewegung die ersten Kontakte mit den zweiten zum Eingriff gebracht werden und die beiden Teile des Funkgerätes durch Federn aneinander gezogen werden. Weitere Einzelheiten dieses Funkgerätes sind dem Oberbegriff des Patentanspruches 1 zu entnehmen.

Eine solche mehr oder weniger naheliegende Bauart eines Funkgerätes hätte den schwerwiegenden Nachteil, dass bei grossen Kräften, welche in einem die beiden Teile auseinanderziehenden Sinne auf das Gerät einwirken, die die Teile zusammenhaltenden Federn in einem unzulässigen Masse beansprucht würden.

Mit der vorliegenden Erfindung kann nun dieser Mangel behoben werden. Die Erfindung betrifft ein tragbares Funkgerät der beschriebenen Art, welches dadurch gekennzeichnet ist, dass von den genannten Rändern beider Geräte-Teile die parallel zu den genannten Schlitzen verlaufenden mindestens auf einem Teil ihrer Länge Rippen und Nuten aufweisen, welche in einer Art angeordnet und aufeinander abgestimmt sind, gemäss welcher, solange die genannten Kontakte zusammengefügt sind, Rippen und Nuten der beiden Geräte-Teile gegenseitig im Eingriff sind und damit die Beanspruchung der Kontakte begrenzen, wenn an den beiden Geräte-Teilen eine im trennenden Sinne einwirkende Kraft ausgeübt wird.

Die Erfindung wird nun anhand eines Ausführungsbeispiels erklärt.

Die Fig. 1 bis 3 zeigen anhand von Gesamtansichten die drei notwendigen Schritte beim Zusammenfügen der beiden Teile eines zweiteiligen Funkgerätes.

Die Fig. 4 und 5 zeigen je einen Quer- und einen Längsschnitt durch denjenigen Bereich des Sender-Empfänger-Teils, an welchen der Batterie-Teil angeschlossen wird.

Die Fig. 6 zeigt einen Querschnitt, die Fig. 7 eine Seitenansicht und die Fig. 8 eine Draufsicht von demjenigen Bereich des Batterie-Teils, welcher an den Sender-Empfänger-Teil angeschlossen wird.

Die Fig. 9 zeigt die perspektivische Ansicht eines am Batterie-Teil angebauten zweiten Kontaktes.

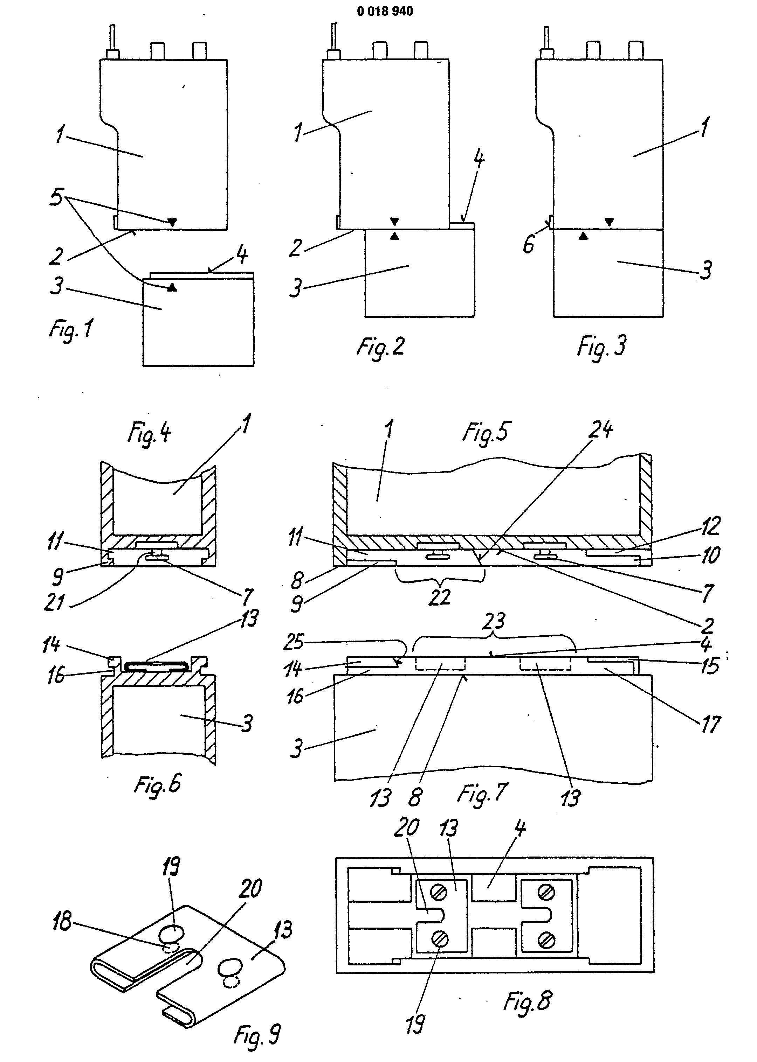

Der in Fig. 1 dargestellte Sender-Empfänger-Teil 1 weist eine Aussenfläche 2 auf, längs welcher ein Batterie-Teil 3 mit seiner Aussenfläche 4 befestigt werden kann. Um die beiden Teile zusammenzufügen, sind die beiden Aussenflächen derart zusammenzuhalten, dass die Marken 5 aufeinanderpassen. Sodann sind die beiden Geräte-Teile 1 und 3 derart längs der Aussenflächen 2 und 4 gegeneinander zu verschieben, dass, wie dies in Fig. 3 gezeigt ist, diese beiden Teile miteinander bündig sind. Eine der Klarheit der Darstellung halber in den übrigen Figuren nicht gezeigte federnde Feststell-Klinke 6 verhindert ein unbeabsichtigtes gegenseitiges Verschieben und damit Trennen der Geräte-Teile. Diese Klinke ist, um eine solche Trennung zu erreichen, in bekannter Weise zuerst anzuheben.

Wie aus den Fig. 4 und 5 ersichtlich ist, weist der Sender-Empfänger-Teil zwei pilzförmige erste Kontakte 7 auf, welche in den mit der Aussenfläche 2 abgeschlossenen Boden dieses Geräte-Teils eingelassen sind. Der gegenüber der Fläche 2 vorstehende Rand 8 weist je auf einem Teil seiner Länge gegen innen gerichtete Rippen 9 und 10 auf, durch welche die Nuten 11 und 12 gebildet sind.

Der in den Fig. 6, 7 und 8 dargestellte Batterie-Teil 3 weist zwei auf seiner Aussenfläche 4 befestigte zweite Kontakte 13 auf, welche mit den beiden Polen der Batterie verbunden sind. Ein solcher Kontakt ist mit seinen Einzelheiten in der Fig. 9 dargestellt. Auf beiden Seiten der Aussenfläche 4 des Batterie-Teils sind Rippen 14 und 15 vorhanden, durch welche die Nuten 16 und 17 gebildet sind.

Der in Fig. 9 dargestellte zweite Kontakt besteht aus einer C-förmigen Feder 13, welche an ihren Löchern 18 befestigt wird, wobei die Löcher 19 den Zugang zu den Löchern 18 erlauben. Der in der Feder 13 vorhandene Schlitz 20 weist eine Breite auf, die zwischen dem Durchmesser des Halses 21 und demjenigen des Kopfs der ersten Kontakte 7 liegt.

Die Rippe 14 ist an der Stelle 25 abgeschrägt. Sofern nun die beiden Geräte-Teile gemäss Fig. 2 zusammengefügt werden, erleichtert diese Abschrägung, zusammen mit einer an der Rippe 10 des Sender-Empfänger-Teils (Fig. 5) ebenfalls vorhandenen Abschrägung 24, die Einführung der Rippe 14 in die Lücke 22.

Es ist nun leicht einzusehen, dass beim gegenseitigen Verschieben der beiden Geräte-Teile, wie dies in den Fig. 2 und 3 dargestellt ist, die ersten Kontakte 7 mit ihren Hälsen 21 in die Schlitze 20 eintreten. Dabei werden auch die Rippen 14 und 15 in die Nuten 11 und 12 eingeschoben, und die Rippen 9 und 10 kommen in Nuten 16 und 17 zu liegen. Zwischen diesen ineinandergreifenden Nuten und Rippen ist ein bestimmtes Spiel vorhanden.

Die Anordnung der Kontakte in bezug auf die Nuten und Rippen bzw. Ränder der Geräte-Teile ist nun derart gewählt, dass im zusammengeschobenen Zustand der Kontakte die zweiten Kontakte durch die Köpfe der ersten von ihrer Unterlage weggezogen und damit derart beansprucht werden, dass sie die beiden Geräte-Teile zusammenziehen. Die ineinandergreifenden Rippen und Nuten werden dabei derart aneinandergerückt, dass das genannte Spiel, sofern auf die beiden Geräte-Teile keine grosse, im trennenden Sinne wirksame Kraft ausgeübt wird, nicht in Erscheinung tritt. Bei einer grossen derartigen Beanspruchung können zwar, unter gesteigerter Beanspruchung der Kontaktfedern 13, die beiden Geräte-Teile im Rahmen des genannten Spiels voneinander wegbewegt werden. Die Beanspruchung der zweiten Kontakte wird dabei jedoch begrenzt, indem nach Ausnützung des genannten Spiels ein Teil der Kräfte von den Nuten und Rippen aufgenommen wird.

Damit eine Anspannung der Kontaktfedern beim Einschieben möglich ist, sind an den Köpfen der ersten Kontakte und im Bereich der Schlitz-Eingänge an den Federn 13 die miteinander in Berührung kommenden Kanten abgerundet oder abgeschrägt, wobei gegebenenfalls eine dieser Massnahmen allein genügen würde.

Die in Fig. 8 sichtbare Oberfläche der zweiten Kontakte 13 wird mit Vorteil in nicht dargestellter Weise durch Plättchen aus Isoliermaterial zugedeckt, um Kurzschlüsse durch Metallgegenstände zu vermeiden, wenn die Batterie mit solchen zusammen gelagert wird.

Damit eine beschriebene Einrichtung mit zusammenschiebbaren Kontakten, Rippen und Nuten verwendungsfähig ist, dürfen die Nuten und Rippen nicht länger sein als der in der Verschiebungsrichtung gemessene Abstand der Kontakte. Als weitere Bedingung muss die Länge der Nuten und Rippen 9...12 und 14...17 derart gewählt sein, dass die dazwischen liegenden Lücken 22 und 23 länger sind als die Rippen und damit beim Zusammenfügen der Geräte-Teile ein Eintreten der Rippen in die Lücken erlauben. Es wäre unter den erwähnten Bedingungen auch möglich, mehr als zwei Strecken mit Nuten und Rippen und dazwischen liegenden Lücken anzuordnen.

In der Folge sind einige am Ausführungsbeispiel getroffene Massnahmen beschrieben, welche ein falsches Zusammenfügen der beiden Geräte-Teile und auch den Versuch dazu verhindern. Die Rippe 14 ist breiter als die Rippe 15, und dementsprechend ist auch die Nut 11 breiter als die Nut 12. Infolgedessen ist es nicht möglich, fälschlicherweise die Leiste 14 in die Nut 12 einzuschieben. Die Rippe 15 ist länger als die Rippe 14 und die Lücke 22. Damit wird ein fälschliches Einschieben der Leiste 15 in die Lücke 22 verhindert, wodurch der Versuch, die Geräte-Teile um eine halbe Drehung verdreht einzusetzen, vereitelt wird. Andere Versuche, die Geräte-Teile falsch zusammenzusetzen, werden durch den vorspringenden Rand 8 verhindert.

Statt einer Anordnung von Kontakten, wie sie im Ausführungsbeispiel dargestellt ist, könnten auch mehr als zwei Kontakte pro Geräte-Teil vorhanden sein. Die Kontakte müssen auch nicht auf eine gegenseitige lineare Bewegung der beiden Geräte-Teile ausgerichtet sein. Es könnte auch in der Mitte der genannten Aussenflächen eine Drehachse angeordnet sein, wobei die beiden Geräte-Teile durch eine gegenseitige Drehbewegung getrennt und aneinandergefügt werden könnten. In diesem Falle wäre eine Anordnung der Nuten und Rippen an den Schmalseiten der Aussenflächen sinnvoll.

## Patentansprüche

1. Tragbares Funkgerät, bestehend aus zwei quaderförmigen Teilen (1, 3), von denen der eine (1) einen Sender-Empfänger und der andere (3) eine Batterie enthält und welche je längs einer bestimmten, vier Ränder aufweisenden Aussenfläche (2, 4) betriebsmässig trennbar und wieder verbindbar sind, wobei an der genannten Aussenfläche (2) des Sender-Empfänger-Teils senkrecht darauf stehende, einen Kopf und einen Hals (21) aufweisende pilzförmige, der Zuführung von Speisung dienende erste Kontakte (7) und an der genannten Aussenfläche (4) des Batterie-Teils zum Zusammenwirken mit den genannten ersten Kontakten (7) bestimmte, je aus einer Feder bestehende zweite Kontakte (13) angeordnet sind, wobei die genannte Feder einen angenähert parallel zur genannten Aussenfläche (4) verlaufenden, senkrecht zu dieser Aussenfläche bewegbaren Teil mit einem nicht durchgehenden, zur Aufnahme eines der ersten Kontakte (7) geeigneten Schlitz (20) aufweist und wobei die Lage der ersten (7) und zweiten (13) Kontakte in bezug auf die genannten Ränder in einer Weise gewählt ist, gemäss welcher, während Teile der Ränder mechanisch miteinander in Beziehung stehen, durch eine in der Richtung der Schlitze (20) verlaufende, zwischen den beiden Geräte-Teilen (1, 3) stattfindende Relativbewegung das gleichzeitige Eintreten aller ersten Kontakte (7) in die Schlitze (20) der zweiten Kontakte (13) bewirkt wird und, unter Ausnützung der Federwirkung der zweiten Kontakte (13), die beiden Teile (1, 3) des Funkgerätes zusammengezogen und je an den Rändern ihrer Aussenflächen (2, 4) zusammengepresst werden, dadurch gekennzeichnet, dass von den genannten Rändern beider Geräte-Teile die parallel zu den genannten Schlitzen (20) verlaufenden mindestens auf einem Teil ihrer Länge Rippen (9, 10, 14, 15) und Nuten (11, 12, 16, 17) aufweisen, welche in einer Art angeordnet und aufeinander abgestimmt sind, gemäss welcher, solange die genannten Kontakte (7, 13) zusammengefügt sind, Rippen und Nuten der beiden Geräte-Teile (1, 3) gegenseitig im Eingriff sind und damit die Beanspruchung der Kontakte begrenzen, wenn an den beiden Geräte-Teilen eine im trennenden Sinne einwirkende Kraft ausgeübt wird.

2. Tragbares Funkgerät nach dem Patentanspruch 1, dadurch gekennzeichnet, dass Rippen (9, 10, 14, 15) und Nuten (11, 12, 16, 17) an den Rändern der beiden Geräte-Teile (1, 3) je mindestens einmal in einer Art unterbrochen sind, gemäss welcher die infolgedessen gebildeten Lükken (22, 23) mindestens so lang sind wie die mit Rippen (9, 10, 14, 15) und Nuten (11, 12, 16, 17) versehenen Stellen, und dass Rippen (9, 10, 14, 15) und Nuten (11, 12, 16, 17) auf den verschiedenen Teilen desselben Randes verschiedene Abmessungen aufweisen, wodurch nach Einpassen der mit Rippen und Nuten versehenen Rand-Teile des einen Geräte-Teils in die Lücken des andern Geräte-Teils, sofern die gegenseitige Lage der beiden Geräte-Teile richtig ist, die beiden Teile durch gegenseitiges Verschieben um eine der Länge der mit Rippen und Nuten versehenen Rand-Teile entsprechende Strecke zusammenfügbar sind.

3. Tragbares Funkgerät nach dem Patentanspruch 1, dadurch gekennzeichnet, dass die genannten Federn (13) je die Form eines plattgedrückten Rohrabschnittes aufweisen, welcher an der der genannten Aussenfläche (4) des Batterie-Teils zugewandten Breitseite aufgeschlitzt ist (Fig. 9).

**Claims**

1. Portable wireless set consisting of two rectangular parallelepiped-shaped parts (1, 3), one of which (1) contains a transceiver and the other (3) a battery, and which are operationally separable and reconnectable each along a certain outside surface (2, 4) having four edges, there being disposed on the said outside surface (2) of the transceiver part, standing perpendicular thereto, mushroom-shaped first contacts (7) having a head and a neck (21) for feed supply, and on the said outside surface (4) of the battery part second contacts (13), each consisting of a spring and intended for cooperating with the said first contacts (7), the said spring having a part running approximately parallel to the said outside surface (4) and movable perpendicular thereto with a slot (20) not passing completely through for receiving one of the first contacts (7), and the position of the first (7) and second (13) contacts relative to the said edges being so chosen that while parts of the edges are mechanically interrelated, by means of a relative movement taking place between the two parts (1, 3) of the set and running in the direction of the slots (20), the simultaneous entry of all first contacts (7) into the slots (20) of the second contacts (13) is brought about and, utilizing the spring action of the second contacts (13), the two parts (1, 3) of the wireless set are pulled together and pressed together, each at the edges of their outside surfaces (2, 4), characterized in that of the said edges of the two parts of the set, those running parallel to the said slots (20) have ribs (9, 10, 14, 15) and grooves (11, 12, 16, 17) on at least part of their length, which ribs and grooves are disposed and harmonized with one another in such a way that as long as the said contacts (7, 13) are joined, ribs and grooves of the two parts (1, 3) of the set are mutually engaged and thereby limit the stress on the contacts when a force acting with a separating effect is exerted upon the two parts of the set.

2. Portable wireless set according to patent claim 1, characterized in that ribs (9, 10, 14, 15) and grooves (11, 12, 16, 17) on the edges of the two parts (1, 3) of the set are each interrupted at least once in such a way that the gaps (22, 23) formed as a result are at least as long as the locations provided with ribs (9, 10, 14, 15) and grooves (11, 12, 16, 17), and that ribs (9, 10, 14, 15) and grooves (11, 12, 16, 17) on the different parts of the same edge have different dimensions, whereby after fitting of the edge parts of the one part of the set provided with ribs and grooves into the gaps of the other part of the set, insofar as the mutual position of the two parts of the set is correct, the two parts can be joined together through mutual displacement by a distance corresponding to the length of the edge parts provided with ribs and grooves.

3. Portable wireless set according to patent claim 1, characterized in that the said springs (13) each have the shape of a flattened pipe section which is slit open on the broad side facing the said outside surface (4) of the battery part (Fig. 9).

**Revendications**

1. Appareil radio portable consistant en deux parties (1, 3), substantiellement parallélipipédiques dont une (1) contient un émetteur-récepteur et dont l'autre (3) contient une pile, ces deux parties étant chacune séparables et à nouveau reliables en fonctionnement, chacune le long de certaines surfaces extérieures (2, 4) présentant quatre bords, des contacts (7) servant à l'amenée de l'alimentation, qui présentent une tête et un cou (21) selon une forme de champignon, se projetant perpendiculairement de ladite surface extérieure (2) de la partie émetteur-récepteur, tandis que, à ladite surface extérieure (4) de la partie de pile, se trouvent disposés des deuxièmes contacts (13) consistant chacun en un ressort et destinés à coopérer avec lesdits premiers contacts (7), ledit ressort présentant une partie s'étendant d'une façon approximativement parallèle à ladite surface extérieure (4) et étant déplaçable perpendiculairement à celle-ci, cette partie présentant une encoche appropriée (20), non traversante, pour la réception d'un des premiers contacts (7), la position des premiers (7) et deuxièmes (13) contacts étant choisie, par rapport aux bords précités, d'une manière selon laquelle, pendant que des parties des bords se trouvent mécaniquement en liaison l'une avec l'autre, par l'effet d'un mouvement relatif intervenant dans la direction de l'encoche (20) entre les deux parties de l'appareil (1, 3), se trouve réalisée l'introduction simultanée de tous les premiers contacts (7) dans les encoches (20) des seconds contacts (13), ceci à l'aide de l'effet de ressort des seconds contacts (13) de façon que les deux parties (1, 3) de l'appareil radio se trouvent assemblées et soient pressées l'une contre l'autre chacune aux bords de leurs surfaces extérieures (2, 4), caractérisé en ce que sur au moins une partie de la longueur desdits bords des deux parties d'appareil qui s'étendent parallèlement auxdites encoches (20), des nervures en relief (9, 10, 14, 15) et des encoches (11, 12, 16, 17) se trouvent disposées d'une façon accordée les unes aux autres, telle que, aussi longtemps que lesdits contacts (7, 13) sont engagés ensemble, les nervures en relief et les encoches des deux parties d'appareil (1, 3) se trouvent en engagement mutuel et par là limitent la solicitation des contacts lorsque s'exerce une force dans une direction tendant à séparer les deux parties d'appareil.

2. Appareil radio portable selon la revendication 1, caractérisé en ce que les nervures en relief (9, 10, 14, 15) et les encoches (11, 12, 16, 17), se trouvent à l'endroit des bords des deux parties d'appareil (1, 3) chacune au moins une fois en une manière interrompue selon laquelle les espaces libres (22, 23) qui sont formés de ce fait sont au moins aussi longs que les endroits munis de nervures en relief (9, 10, 14, 15) et d'encoches (11, 12, 16, 17), les nervures en relief (9, 10, 14, 15) et les encoches (11, 12, 16, 17) présentant différentes dimensions sur les différentes parties d'un même bord, ce par quoi, après ajustage des parties de bord munies de nervures en relief et d'encoches d'une des parties d'appareil dans les espaces libres de l'autre des parties d'appareil, ceci pour autant que la position relative des deux parties d'appareil soit correcte, ces deux parties se trouvent engageables par un décalage relatif sur un tronçon correspondant à la longueur des parties de bord munies de nervures en relief et d'encoches.

3. Appareil radio portable selon la revendication 1, caractérisé en ce que lesdits ressorts (13) ont chacun la forme d'un tronçon de tube aplati par pression, lequel est ouvert d'une encoche dans son côté large dirigé contre ladite surface extérieure (4) de la partie de pile (fig. 9).

Fig. 1

Fig. 2

Fig. 3

Fig. 4

Fig. 5

Fig. 6

Fig. 7

Fig. 8

Fig. 9